# EUROPÄISCHE PATENTANMELDUNG

(11) **EP 2 131 155 A1**
(43) Veröffentlichungstag der Anmeldung: **09.12.2009**
(21) Anmeldenummer: 08010146.2
(22) Anmeldetag: 04.06.2008
(51) Int. Cl.: G01D 4/00

(54) **Verfahren zur Erfassung von Energieverbrauchsdaten einer Einrichtung mit Verbrauchern sowie Einspeiseschrank zur Erfassung von Energieverbrauchsdaten**

(71) Anmelder: ads-tec GmbH, 70771 Leinfelden-Echterdingen (DE)
(72) Erfinder: Speidel, Thomas, 71706 Markgröningen (DE)
(74) Vertreter: Wasmuth, Rolf

(57) **Zusammenfassung**

Die Erfindung betrifft ein Verfahren zur zentralen Erfassung von Energieverbrauchsdaten einer Einrichtung (1) mit Verbrauchern (2, 3, 4), wobei die Einrichtung (1) über eine Versorgungsleitung (7) mit einem Einspeiseschrank (10) verbunden ist, welcher an einer Energie zuführenden Hauptleitung (5) angeschlossen ist. Zur Erfassung der Energiedaten des angeschlossenen Verbrauchers ist vorgesehen, dem Einspeiseschrank (10) einen eindeutigen Identifier zuzuordnen und im Einspeiseschrank (10) mit einer Erfassungseinheit (12) den Energieverbrauch eines Verbrauchers (1) der Einrichtung (1) zu erfassen. Die von der Erfassungseinheit (12) erfassten Energieverbrauchsdaten werden über ein Kommunikationsinterface (24) einem externen Portal (30) mitgeteilt, wobei der dem Einspeiseschrank (10) zugeordnete eindeutige Identifier sowie die Zugangsdaten zum Anmelden am externen Portal (30) aus einem Datenspeicher (31) ausgelesen werden, der mit der Energieerfassungseinheit (12) verbunden ist.

## Beschreibung

Die Erfindung betrifft ein Verfahren zur Erfassung der Energieverbrauchsdaten einer Einrichtung mit einem Verbraucher nach dem Oberbegriff des Anspruchs 1 sowie einen Einspeiseschrank zur Erfassung der Energieverbrauchsdaten nach dem Oberbegriff des Anspruchs 8.

Einrichtungen der modernen Gesellschaft sind ohne Energiezufuhr nicht zu betreiben. Elektrizität, Gas und Wasser verbraucht jeder Haushalt, wobei die verschiedenen Energieträger über einen entsprechenden Einspeiseschrank oder Anschlussschrank dem zu betreibenden Verbraucher zugeführt sind.

Auch industriell wird eine unüberschaubare Anzahl von Verbrauchern genutzt. So werden in Einrichtungen wie komplexen Fertigungshallen eine Vielzahl von Maschinen und Maschinenanlagen betrieben, die über als Schaltschränke ausgeführte Einspeiseschränke einerseits gesteuert und andererseits mit Energie versorgt werden. Die Steuerung der Maschinen und Maschinenanlagen kann über die Schaltschränke von einem zentralen Datenbus erfolgen, wobei die Schaltschränke meist mit einer modernen Firewall gegen Missbrauch geschützt sind.

Der Energieverbrauch derartiger komplexer Einrichtungen wird nur über entsprechende Zähler des jeweiligen Versorgungswerkes summarisch erfasst, ohne dass detaillierte Erkenntnisse des Energieverbrauchs über der Zeit oder auch der Energieverbrauch einzelner Verbraucher erfasst werden kann.

Der Erfindung liegt die Aufgabe zugrunde, den Energieverbrauch komplexer Einrichtungen mit Verbrauchern genauer zu erfassen, um daraus Schlüsse für eine effektive Nutzung der zugeführten Energie abzuleiten.

Diese Aufgabe wird nach dem Verfahren nach Anspruch 1 gelöst. Ein Einspeiseschrank zur Durchführung des Verfahrens ist im Anspruch 8 angegeben.

Nach dem erfindungsgemäßen Verfahren wird der Energieeinspeisestelle und damit dem Einspeiseschrank ein eindeutiger Identifier zugeordnet, um eine eindeutige Zuordnung der zu erfassenden Energieverbrauchsdaten zu gewährleisten. Im Einspeiseschrank selbst wird mit einer Erfassungseinheit der Energieverbrauch eines Verbrauchers der Einrichtung erfasst. Die von der Erfassungseinheit erfassten Energieverbrauchsdaten werden über ein Kommunikationsinterface einem externen Portal mitgeteilt, wobei der dem Einspeiseschrank zugeordnete eindeutige Identifier sowie die Zugangsdaten zum Anmelden am externen Portal aus einem Datenspeicher ausgelesen werden, der mit der Energieerfassungseinheit verbunden ist. Zweckmäßig ist der Datenspeicher als mobiler Datenspeicher vorgesehen, der über ein Lesegerät mit der Energieerfassungseinheit kommuniziert.

Die dem Portal vorzugsweise fortlaufend mitgeteilten Energieverbrauchsdaten können zweckmäßig zeitlich mit Daten der Einrichtung korreliert werden, insbesondere mit Produktionsdaten der industriellen Maschine oder Maschinenanlage korreliert werden. Der Betreiber der Anlage kann so Schlüsse für eine optimale Auslastung und Steuerung der Einrichtung ziehen. Dabei sind die Energieverbrauchsdaten durch Sensoren erfasst, die mit der Energieerfassungseinheit verbunden sind. Die Sensorsignale können vor Weitergabe an die Energieerfassungseinheit aufbereitet, insbesondere vorverarbeitet werden.

Die Datenübertragung der ermittelten Energieverbrauchsdaten der Einrichtung an das Portal kann zeitgesteuert und/oder ereignisgesteuert sein. Dabei kann die Energieerfassungseinheit in Abhängigkeit einer Auswertung der erfassten Energiedaten Einzelverbraucher einer Einrichtung wie einer industriellen Maschine oder Maschinenanlage steuern oder auch Verbraucher der Einrichtung abschalten.

Die Sensoren sind als Messeinrichtung jeweils so ausgelegt, dass allgemein Verbrauchsdaten eines Energieträgers erfassbar sind. Volumenzähler bzw. Strömungszähler oder Durchflussmesser sind für Fluide wie Wasser, Gas, Heizöl, Warmwasser usw. verwendbar. Zur Messung des Verbrauchs an Elektrizität sind Strommesser einsetzbar; Temperatur oder Druckmesser können weitere Größen zur Ermittlung eines Energieverbrauchs sein.

Ein Einspeiseschrank für eine Einrichtung mit Verbrauchern weist eine Erfassungseinheit für Energieverbrauchsdaten eines angeschlossenen Verbrauchers auf, wobei die Energieverbrauchsdaten mit an der Energieerfassungseinheit angeschlossenen Sensoren erfasst sind. Die von der Erfassungseinheit erfassten Energieverbrauchsdaten sind über ein Kommunikationsinterface einem externen Portal übermittelbar, wobei ein eindeutiger Identifier zugeordnet ist. Zugangsdaten zum Anmelden am externen Portal sind der Energieerfassungseinheit aus einem Datenspeicher zur Verfügung gestellt.

Vorzugsweise ist in jedem Einspeiseschrank einer Einrichtung eine Erfassungseinheit für die Energieverbrauchsdaten der angeschlossenen Verbraucher vorgesehen, und diese werden - jeweils mit einem anderen eindeutigen Identifier versehen - über das Kommunikationsinterface dem externen Portal übermittelt.

Der Datenspeicher ist vorzugsweise ein mobiler, zweckmäßig auswechselbarer Datenspeicher und enthält den der Erfassungseinheit zuzuordnenden eindeutigen Identifier. Zweckmäßig sind auf dem mobilen Datenspeicher weitere Zugangsdaten wie Benutzername, Passwort, Portaladresse, Proxyeinstellungen, Gatewayeinstellungen, Zertifikate oder dgl. gespeichert. In Weiterbildung der Erfindung ist der mobile, auswechselbare Datenspeicher eine SIM-Karte, insbesondere eine Telefonkarte mit Zugangsdaten zu einem Funknetz.

Ein derartiges Funknetz kann ein WAN-Netz wie ein GSM-Netz (Global System for Mobile Communications), ein GPRS-Netz (General Packet Radio Service), ein UMTS-Netz (Universal Mobile Telecommunications System), ein WIMAX-Netz (Worldwide Interoperability for Microware Access) oder dgl. Netz sein.

Weitere Merkmale der Erfindung ergeben sich aus den weiteren Ansprüchen, der Beschreibung und der Zeichnung, in der ein nachfolgend im Einzelnen beschriebenes Ausführungsbeispiel der Erfindung dargestellt ist. Es zeigen:
- Fig. 1: in schematischer Darstellung eine Einrichtung mit einem Verbraucher am Beispiel einer industriellen Maschinenanlage mit einem zugeordneten Schaltschrank als Einspeiseschrank,
- Fig. 2: in schematischer Darstellung eine Energieerfassungseinheit.

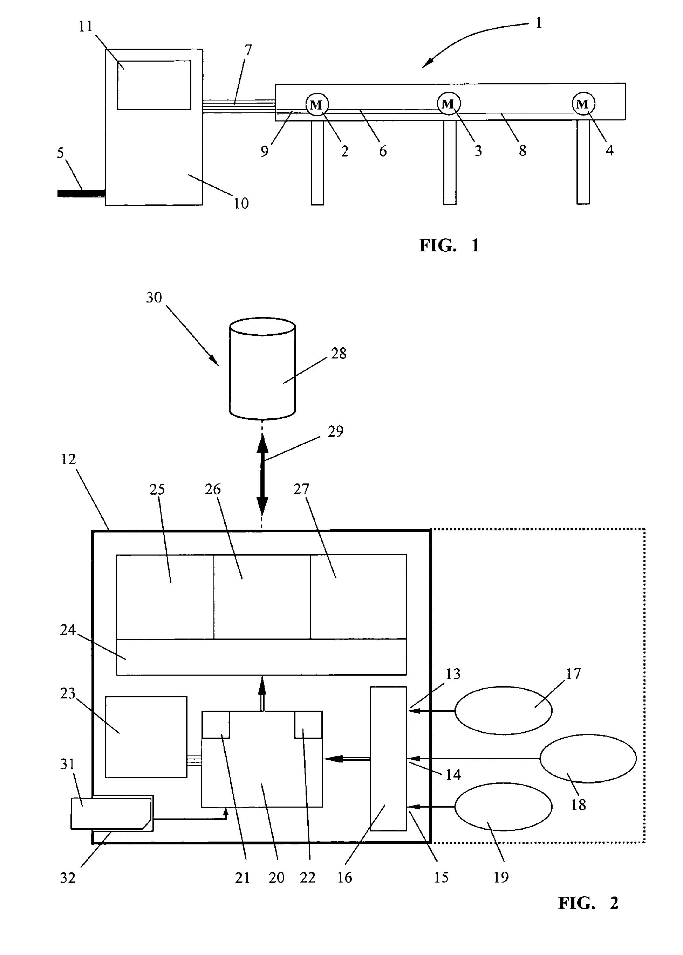

In Fig. 1 ist mit 1 eine Einrichtung bezeichnet, die mehrere Verbraucher 2, 3, 4 aufweist. Im gezeigten Ausführungsbeispiel ist die Einrichtung eine industrielle Maschine bzw. eine industrielle Maschinenanlage mit elektrischen Einzelverbrauchern 2, 3, 4, nämlich elektrischen Motoren. Die Einrichtung 1 kann z. B. eine Warentransportbahn, eine Werkstücktransportbahn oder dgl. sein.

Jede Einrichtung 1 ist über einen Einspeiseschrank 10 mit einer z. B. elektrische Energie zuführenden Hauptleitung 5 verbunden. Die Hauptleitung ist im Ausführungsbeispiel ein Drehstromanschluss von z. B. 400 V. Als Energie zuführende Hauptleitung ist auch eine Fluid führende Leitung wie eine Gasleitung, eine Warmwasserleitung oder eine Heizölleitung .zu verstehen. Über Versorgungsleitungen 7 ist die Einrichtung 1 angeschlossen, so z. B. über Leitungen 6, 8 und 9 die Einzelverbraucher 2, 3, 4. Im Einspeiseschrank 10 ist die Versorgungstechnik, gegebenenfalls Steuerungstechnik und Überwachungstechnik integriert; zur Bedienung kann ein derartiger Einspeiseschrank 10 oder Schaltschrank ein Displayfeld oder Bedienfeld 11 aufweisen.

Zur zentralen Erfassung der Energieverbrauchsdaten eines Verbrauchers, im Ausführungsbeispiel eines Verbrauchers der Einrichtung 1, ist im Einspeiseschrank 10 eine Erfassungseinheit 12 vorgesehen, die den Energieverbrauch eines angeschlossenen Verbrauchers der Einrichtung 1 insbesondere fortlaufend erfasst. Hierzu weist die Erfassungseinheit 12 eine oder mehrere Schnittstellen 13, 14, 15 auf, an denen Sensoren 17, 18, 19 als Messeinrichtungen angeschlossen sind. Die Sensoren 17 bis 19 können über die Erfassungseinheit mit einer Betriebsspannung versorgt werden; eine separate Netzversorgung der Sensoren 17, 18 und 19 kann zweckmäßig sein.

So kann der Sensor 17 als Messeinrichtung für elektrische Messgrößen wie Strom, Spannung und Frequenz ausgelegt sein, während der Sensor 18 für nicht elektrische Messgrößen wie Druck, Durchfluss und Temperatur von Fluiden, wie z. B. Flüssigkeiten und Gasen, ausgelegt sein kann. Der Sensor 19 kann als "Wärmesensor" Temperaturen an vorgegebenen Messstellen der Einrichtung 1 erfassen. Dabei kann die Erfassungseinheit 12 zusammen mit den Sensoren bzw. Messeinrichtungen in einem gemeinsamen Gehäuse angeordnet sein, wie in Fig. 2 strichliert dargestellt ist. Vorteilhaft ist die Erfassungseinheit 12 in einem getrennten Gehäuse vorgesehen, an die über die Schnittstellen 13, 14, 15 handelsübliche Sensoren 17, 18, 19 angeschlossen sein können. Die Erfassungseinheit 12 ist dabei in jedem Energie einspeisenden Einspeiseschrank einer Einrichtung angeordnet und kann insbesondere bei Schaltschränken einer industriellen Maschinenanlage Teil einer im Einspeiseschrank bereits vorhandenen Firewall oder dgl. Schutzeinrichtung gegen unbefugten Zugriff sein.

Die erfassten Messgrößen können in einer Aufbereitungseinheit 16 vor Weitergabe an einen zentralen Prozessor 20 aufbereitet und damit vorverarbeitet werden. Für diese Aufbereitung der Daten kann auch der Prozessor 20 genutzt werden, der zweckmäßig mit einem Arbeitsspeicher 21 und einem Programmspeicher 22 verbunden ist.

Die Erfassungseinheit 12 weist ferner ein Kommunikationsinterface 24 auf, welches mindestens eine analoge oder digitale Kommunikationsschnittstelle 25, 26, 27 aufweist. Im gezeigten Ausführungsbeispiel gemäß Fig. 2 sind drei Kommunikationsschnittstellen vorgesehen, und zwar eine Netzwerkschnittstelle 25, die als Ethernetschnittstelle (LAN) kabelgebunden oder drahtlos (WLAN) sein kann. Zusätzlich oder alternativ kann ein analoges oder digitales Modem 26 vorgesehen sein. Ferner ist die Möglichkeit der Nutzung des Mobilfunks vorteilhaft, weshalb die weitere Schnittstelle 27 eine WAN Schnittstelle (GSM / GPRS / UMTS oder WIMAX) ist.

Über das Kommunikationsinterface 24 sind die erfassten Energiedaten des an den Einspeiseschrank 10 angeschlossenen Verbrauchers, im Ausführungsbeispiel die Einrichtung 1 mit ihren Einzelverbrauchern 2, 3, 4, einem externen Portal 30 übermittelbar, das auf dem Server 28 eines Dienstleistungsanbieters installiert sein kann. Die drahtgebundene oder drahtlose Datenverbindung 29 ist vorteilhaft verschlüsselt und stellt somit eine sichere Verbindung dar. Dabei kann die Datenübertragung an das Portal 30 zeitgesteuert erfolgen oder ereignisgesteuert sein. Ist z. B. der Puffer der gesammelten Messwerte an Energieverbrauchsdaten in der Erfassungseinheit 12 voll, wird die Datenübertragung gestartet, um den Puffer zu leeren. Auch kann eine Datenübertragung bei Erreichen vorgegebener Messwertgrenzen (Über- oder Unterschreitung) gestartet werden oder nach einem festen Zeitplan erfolgen. Die Intervalle der Zeitsteuerung sind zweckmäßig frei einstellbar, können aber auch regelbasiert in Abhängigkeit der erfassten Messwerte, deren Verläufe oder Grenzen oder anderen Parametern dynamisch verändert werden.

Zur eindeutigen Kennung der Verbrauchsstelle bzw. des Einspeiseschrankes 10 ist der Erfassungseinheit 12 ein eindeutiger, unverwechselbarer Identifier zugeordnet, der vorteilhaft auf einem mobilen Datenspeicher 31 durch eine geeignete Kennung abgespeichert ist. Der mobile, auswechselbare Datenspeicher kann ferner weitere Zugangsdaten zum Anmelden an dem externen Portal 30 aufweisen, die über ein Lesegerät 32 der Erfassungseinheit 12 aus dem mobilen Datenspeicher 31 ausgelesen und der Energieerfassungseinheit 12 zur Verfügung gestellt sind.

Der mobile Datenspeicher kann z. B. Zugangsdaten wie Benutzername, Passwort, eindeutiger Identifier, Portaladresse, Proxyeinstellungen, Gatewayeinstellungen des Netzwerkes oder dgl. aufweisen.

In besonderer Weiterbildung der Erfindung ist der Datenspeicher eine SIM-Karte, insbesondere eine Telefonkarte mit Zugangsdaten zu einem Mobilfunknetz, welches über die Schnittstelle 27 angesteuert sein kann.

Die von der Erfassungseinheit 12 für jeden überwachten Einzelverbraucher fortlaufend erfassten Daten werden entweder direkt oder zwischengepuffert an das Portal 30 weitergegeben und in einer entsprechenden Datenbank abgelegt. Diese erfassten Energiedaten können z. B. mit Produktionsdaten der Einrichtung 1, z. B. der industriellen Maschine, zeitlich korreliert und als Auswertung dem Betreiber der Einrichtung 1 zur Verfügung gestellt werden. Hieraus kann der Betreiber der Einrichtung 1 Rückschlüsse auf Auslastung und Energieverbrauch ziehen.

In Weiterbildung der Erfindung kann die Erfassungseinheit 12 in Abhängigkeit einer Auswertung der erfassten Energiedaten im Portal 30 Einzelverbraucher 2, 3, 4 der Einrichtung 1 steuern, um Einfluss auf den Energieverbrauch der Einrichtung 1 zu nehmen. Im automatischen Abgleich mit hinterlegten Daten kann der an den Einspeiseschrank angeschlossene Verbraucher, also die Einrichtung 1 oder Einzelverbraucher der Einrichtung 1, in einen Energiesparmodus geschaltet werden, z. B. bei einer drohenden Netzüberlastung oder bei Eintritt in sehr teuere Lastspitzen. Mittels der zentral erfassten Daten können Einrichtungen, wie z. B. Maschinen und Anlagen, auch zentral eine automatische Freischaltung für den Betrieb erhalten oder für den Betrieb gesperrt werden. Damit können Einrichtungen zeitlich so gesteuert zu- und abgeschaltet werden, dass die Gesamtverbrauchswerte in vordefinierten Zeitphasen in der Summe keine bestimmten, vorgegebenen Grenzen überschreiten.

In Einrichtungen 1 wie komplexen Fertigungshallen erfolgt die Steuerung der einzelnen Maschinen und Maschinenanlagen über einen zentralen Bus, an den die Einspeiseschränke 10 bzw. Schaltschränke angeschlossen sind. Der Anschluss der Einspeiseschränke 10 ist mit einer entsprechenden Firewall versehen, in die die Energieerfassungseinheit integriert werden kann. So können z. B. der mobile Datenspeicher zur Identifikation des Einspeiseschrankes von der Energieerfassungseinheit 12 und der bereits vorhandenen Firewall gemeinsam genutzt werden. So kann ein äußerer Zugriff auf die Energieerfassungseinheit 12 mit einem hohen Maß an Sicherheit gegen Missbrauch gesichert werden. Der mobile Datenspeicher kann dabei auch Zertifikate oder dgl. enthalten, die eine sichere Anmeldung und/oder Datenübertragung gewährleisten. Dabei können die Daten auf dem mobilen Datenspeicher 31 ganz oder teilweise verschlüsselt sein.

Die Kombination aus einem Kommunikationsinterface, das bevorzugt Teil einer für eine Datenverbindung genutzten Firewall sein kann, mit Sensoren zur Erfassung von Energieverbrauchsdaten in Verbindung mit einem eindeutigen Identifier (Kennung) ermöglicht das Sammeln von Daten in einem zentralen Portal zwecks späterem Abruf oder einer Auswertung.

## Patentansprüche

1. Verfahren zur zentralen Erfassung von Energieverbrauchsdaten einer Einrichtung (1) mit Verbrauchern (2, 3, 4), insbesondere einer Einrichtung (1) wie eine industrielle Maschine, eine Maschinenanlage oder dgl., wobei die Einrichtung (1) über eine Versorgungsleitung (7) mit einem Einspeiseschrank (10) verbunden ist, welcher an einer Energie zuführenden Hauptleitung (5) angeschlossen ist,
**dadurch gekennzeichnet, dass** dem Einspeiseschrank (10) ein eindeutiger Identifier zugeordnet wird, dass im Einspeiseschrank (10) mit einer Erfassungseinheit (12) der Energieverbrauch eines Verbrauchers (1) der Einrichtung (1) erfasst wird, dass die von der Erfassungseinheit (12) erfassten Energieverbrauchsdaten über ein Kommunikationsinterface (24) einem externen Portal (30) mitgeteilt werden, wobei der dem Einspeiseschrank (10) zugeordnete eindeutige Identifier sowie die Zugangsdaten zum Anmelden am externen Portal (30) aus einem Datenspeicher (31) ausgelesen werden, der mit der Energieerfassungseinheit (12) verbunden ist.

2. Verfahren nach Anspruch 1,
**dadurch gekennzeichnet, dass** die Energieverbrauchsdaten zeitlich mit Daten der Einrichtung korreliert werden, insbesondere mit Produktionsdaten der industriellen Maschine oder Maschinenanlage korreliert werden.

3. Verfahren nach Anspruch 1 oder 2,
**dadurch gekennzeichnet, dass** die Energieverbrauchsdaten durch Sensoren (17, 18, 19) erfasst werden, die mit der Energieerfassungseinheit (12) verbunden sind.

4. Verfahren nach einem der Ansprüche 1 bis 3,
**dadurch gekennzeichnet, dass** die Sensorsignale vor Weitergabe an die Energieerfassungseinheit (12) aufbereitet, insbesondere vorverarbeitet werden.

5. Verfahren nach einem der Ansprüche 1 bis 4,
**dadurch gekennzeichnet, dass** die Datenübertragung an das Portal (30) zeitgesteuert und/oder ereignisgesteuert ist.

6. Verfahren nach einem der Ansprüche 1 bis 5,
**dadurch gekennzeichnet, dass** die Energieerfassungseinheit (12) in Abhängigkeit einer Auswertung der erfassten Energiedaten einen Verbraucher (2, 3, 4) der Einrichtung (1), vorzugsweise der industriellen Maschine oder Maschinenanlage (1) steuert, insbesondere abschaltet.

7. Verfahren nach einem der Ansprüche 1 bis 6,
**dadurch gekennzeichnet, dass** die Sensoren (17, 18, 19) den Volumenstrom eines Energieträgers wie ein Fluid oder Strom erfassen.

8. Einspeiseschrank für eine Einrichtung (1) mit Verbrauchern (2, 3, 4), insbesondere einer Einrichtung wie eine industrielle Maschine, eine Maschinenanlage oder dgl., mit einer Energie zuführenden Hauptleitung (5) und einer Energie abführenden Versorgungsleitung (7),
**dadurch gekennzeichnet, dass** im Einspeiseschrank (10) eine Erfassungseinheit (12) für Energieverbrauchsdaten des angeschlossenen Verbrauchers (1) vorgesehen ist, dass die Energieverbrauchsdaten mit an der Energieerfassungseinheit (12) angeschlossenen Sensoren (17, 18, 19) erfasst sind, und dass die von der Erfassungseinheit (12) erfassten Energieverbrauchsdaten über ein Kommunikationsinterface (24) einem externen Portal (30) übermittelbar sind, wobei der Energieerfassungseinheit (12) ein eindeutiger Identifier zugeordnet wird und die Zugangsdaten zum Anmelden am externen Portal (30) aus einem Datenspeicher (31) zur Verfügung gestellt sind.

9. Einspeiseschrank nach Anspruch 8,
**dadurch gekennzeichnet, dass** der Datenspeicher ein mobiler Datenspeicher (31) ist und der Datenspeicher insbesondere den eindeutigen Identifier und vorzugsweise weitere Daten wie Benutzername, Passwort, Portaladresse, Proxyeinstellungen, Gatewayeinstellungen, Sicherheitszertifikate oder dgl. enthält.

10. Einspeiseschrank nach Anspruch 8 oder 9,
**dadurch gekennzeichnet, dass** die Energieerfassungseinheit (12) und der Datenspeicher (31) Teil einer Firewall sind.

11. Einspeiseschrank nach einem der Ansprüche 8 bis 10,
**dadurch gekennzeichnet, dass** der mobile Datenspeicher (31) eine SIM-Karte, insbesondere eine Telefonkarte mit Zugangsdaten zu einem Mobilfunknetz ist.

12. Einspeiseschrank nach einem der Ansprüche 8 bis 11,
**dadurch gekennzeichnet, dass** die Datenverbindung (29) zum externen Portal (30) verschlüsselt ist.

13. Einspeiseschrank nach einem der Ansprüche 7 bis 11,
**dadurch gekennzeichnet, dass** die Energieerfassungseinheit (12) einen Prozessor (20) mit einem Arbeitsspeicher (21) und einem Programmspeicher (22) sowie zumindest eine Schnittstelle (13, 14, 15) für einen Sensor (17, 18, 19) als Messeinrichtung aufweist.

14. Einspeiseschrank nach einem der Ansprüche 8 bis 13,
**dadurch gekennzeichnet, dass** das Kommunikationsinterface (24) mindestens eine analoge oder digitale Kommunikationsschnittstelle (25, 26, 27) in drahtgebundener oder drahtloser Technik aufweist, insbesondere Modem, LAN (Local Area Network), WLAN (Wireless Local Area Network) oder WAN (Wide Area Network).

15. Einspeiseschrank nach einem der Ansprüche 8 bis 14,
**dadurch gekennzeichnet, dass** die als Messeinrichtungen an die Erfassungseinheit (12) angeschlossenen Sensoren (17, 18, 19) Strom, Spannung und/oder Frequenz einer Versorgungsspannung und/oder nicht elektrische Messgrößen. wie Temperatur, Druck, Durchfluss oder dgl. erfassen.
